(19) **Europäisches Patentamt**

**European Patent Office**

**Office européen des brevets**

(11) **EP 0 636 107 B1**

(12) **EUROPEAN PATENT SPECIFICATION**

(45) Date of publication and mention
of the grant of the patent:
**13.02.2002 Bulletin 2002/07**

(21) Application number: **93910604.3**

(22) Date of filing: **14.04.1993**

(51) Int Cl.[7]: **C01B 17/00**, C01B 17/02,
C01B 17/16, C01C 3/00,
B01J 8/00, C01B 17/04

(86) International application number:
**PCT/US93/03534**

(87) International publication number:
**WO 93/21107 (28.10.1993 Gazette 1993/26)**

(54) **PROCESS AND USE OF AN APPARATUS FOR RECOVERING SULPHUR FROM A GAS STREAM CONTAINING HYDROGEN SULPHIDE**

VERFAHREN UND ANWENDUNG EINER VORRICHTUNG ZUR GEWINNUNG VON SCHWEFEL AUS GASSTRÖMEN ENTHALTEND SCHWEFELWASSERSTOFFSÄURE

PROCEDE ET L'UTILISATION D'UN APPAREIL D'ELIMINATION DE SOUFRE D'UN COURANT GAZEUX CONTENANT DE L'ACIDE SULPHYDRIQUE

(84) Designated Contracting States:
**BE DE ES FR GB IT NL**

(30) Priority: **15.04.1992 US 868432**
**04.05.1992 US 877936**

(43) Date of publication of application:
**01.02.1995 Bulletin 1995/05**

(60) Divisional application:
**01111956.7 / 1 156 012**

(73) Proprietor: **EXXONMOBIL OIL CORPORATION**
**Fairfax, VA 22037-0001 (US)**

(72) Inventors:
• **BUCHANAN, John, Scott**
**Mercerville, NJ 08619 (US)**
• **IYENGAR, Jagannathan, Nambi**
**Chester, NJ 07930-9741 (US)**

• **SODOMIN, Joseph, Frank**
**Landeberg, Pensylvania 19350 (US)**
• **STERN, David, Lawrence**
**Princeton, NJ 08540 (US)**
• **TEITMAN, Gerald, Joseph**
**Vienna, VA 22180 (US)**

(74) Representative: **Jones, Helen Marjorie Meredith**
**Gill Jennings & Every, Broadgate House, 7 Eldon Street**
**London EC2M 7LH (GB)**

(56) References cited:
**EP-A- 0 215 709**      **EP-A- 0 495 710**
**US-A- 3 764 665**      **US-A- 3 821 110**
**US-A- 3 832 445**      **US-A- 3 987 154**
**US-A- 4 432 862**      **US-A- 4 692 318**
**US-A- 4 836 993**      **US-A- 4 855 117**
**US-A- 4 857 297**

## Description

The present invention relates to a process and apparatus for recovering sulphur from an ammonia acid gas stream containing hydrogen sulphide. The process also works on other sulphur-containing gas streams, e. g., light, saturated hydrocarbons, hydrogen or carbon monoxide gas streams containing $H_2S$ or $H_2S$ and sulphur oxides.

Refinery streams are typically desulphurized by the Claus process wherein elemental sulphur is produced by reacting hydrogen sulphide and sulphur dioxide in the presence of a catalyst. The Claus system uses a combustion chamber which, at 950 °C to 1,350°C (1742°F-2462°F), converts 50 to 70% of sulphur contained in the feed gas into elemental sulphur. Sulphur is condensed by cooling the reaction gas to a temperature below the dew point of sulphur after which the remaining gas is heated and further reacted over a catalyst. Normally, the gas passes through at least two such Claus catalyst stages.

The different stages of the process may be represented by the following equations:

$$H_2S + 3/2\ O_2 \rightarrow SO_2 + H_2O \qquad \text{I}$$

$$2H_2S + SO_2 \rightarrow 3S + 2H_2O \qquad \text{II}$$

The overall reaction is:

$$3H_2S + 3O_2 \rightarrow 3S + 3H_2O \qquad \text{III}$$

The final Claus exhaust gas still contains small amounts of $H_2S$, $SO_2$, $CS_2$, carbon oxysulphide, CO, and elemental sulphur in the form of a vapour or mist. The exhaust gas generally is subjected to post-combustion to convert substantially everything to $SO_2$ and then further purified by Claus after-treatments.

Sulphur emitted as sulphur oxides ("$SO_x$") into the atmosphere with the exhaust gas may amount to 2-6% of the sulphur contained in the feed gas in the form of $H_2S$. In view of air pollution and the loss of sulphur involved, further purification is imperative.

Claus aftertreatments have been developed. These are carried out after the last Claus stage or after the post-combustion. These aftertreatments are, however, complicated and expensive or inadequate.

One aftertreatment, carried out before post-combustion, seeks to achieve by catalytic conversion as complete a reaction as possible between $H_2S$ and $SO_2$. The reaction temperature is lowered to below the condensation point of sulphur, whereby the reaction equilibrium corresponding to equation II is shifted to form sulphur. A distinction is made between dry processes using alternating reactors in which the catalyst is intermittently charged with sulphur and discharged, and processes where $H_2S$ and $SO_2$ react in a high-boiling catalyst-containing liquid to form elemental sulphur which is drawn off continuously as a liquid product.

Unfortunately, in these processes any deviation from the optimum $H_2S$:$SO_2$ ratio in the Claus exhaust gas results in a reduced sulphur yield. No appreciable conversion of sulphur compounds such as COS and $CS_2$ occurs. Sulphur recovery efficiency of Claus using this form of aftertreatment is limited to 98-99%. Cyclic operation, with alternating reactors, requires at least two reactors and much valves and piping.

A second aftertreatment catalytically hydrogenates $SO_2$ and S with $H_2$ and CO while COS and $CS_2$ are simultaneously hydrolyzed with $H_2O$ into $H_2S$ which can be treated conventionally.

Hydrogenation/hydrolysis does not require a stoichiometric $H_2S/SO_2$ ratio in the Claus exhaust gas. It almost completely converts COS and $CS_2$ so that sulphur yields of more than 99.8% can eventually be obtained.

This process incurs high capital expenditures for elaborate apparatus. It also consumes substantial energy. Recycle of $H_2S$ reduces the Claus system capacity, while the production of waste water containing harmful constituents presents additional problems. In addition, the treatment (such as amine absorption) used to remove $H_2S$ is generally ineffective for removing unconverted COS and $CS_2$. Total emissions of reduced sulphur species are typically around 10 ppm by volume with this after treatment.

A third aftertreatment oxidizes all sulphur compounds into $SO_x$ which is then further processed. These processes are downstream of the post-combustion and therefore independent of the mode in which the Claus system is run. There are also dry processes, where $SO_2$ is adsorbed and returned to the Claus unit or processed to form sulphuric acid, and wet processes, where $SO_2$ is removed by absorptive scrubbing and further processed. For complete oxidation of COS and $CS_2$ into $SO_2$, the energy requirements are high and following the after-combustion, very large exhaust gas flows have to be treated.

The equilibrium conversion of the Claus reaction (equation II) may be improved by condensing out part of the water in the gas. The gas is then reheated and charged to another Claus stage to form elemental sulphur. This produces waste water which is highly corrosive due to the formation of thiosulphuric acid, polythionic acids and sulphurous acid. Processing of such waste water is expensive. Unavoidable formation of deposits of elemental sulphur also occurs during $H_2O$ condensation. Moreover, there is no conversion of COS and $CS_2$ so the maximum recovery of sulphur is about 98%. As a result of these disadvantages, this process has not been used on a commercial scale.

Where the aftertreatment involves conversion of all sulphur compounds into hydrogen sulphide, it is also known to oxidize part of said hydrogen sulphide with air into $SO_2$ or to convert part of the sulphur produced into sulphur dioxide and thereafter catalytically to convert the remaining hydrogen sulphide with sulphur dioxide at 125°C - 150°C in fixed-bed reactors into sulphur. The sulphur loaded catalyst is regenerated by passing hot oxygen-free gases containing hydrogen sulphide through the catalyst. This avoids the disadvantages associated with the first type of aftertreatment, such as dependence on $H_2S/SO_2$ ratio and $COS/CS_2$ content in the Claus exhaust gas. Disadvantages of this process are the high capital cost and the higher $H_2S + SO_2$ input concentration for the low-temperature reactor caused by the admixture of a separately produced flow of $SO_2$. The maximum conversion overall efficiency obtainable with this process approaches 99%.

An aftertreatment process which oxidizes all sulphur compounds into $SO_2$ is exemplified in US-A-3764665. This patent disclosed a process for removing sulphur oxides from gas mixtures with a solid acceptor for sulphur oxides wherein the solid acceptor is regenerated with a steam-diluted reducing gas and the regeneration off-gas is fed to a Claus sulphur recovery process. The improvement comprises cooling the regeneration off-gas to condense the water vapour contained therein, contacting the cooled off=gas with a sulphur dioxide-selective liquid absorbent, passing the fat liquid absorbent to a buffer zone and then to a stripping zone wherein the absorbed SO2 is recovered from the liquid absorbent and is supplied to the sulphur recovery process. By operating in this manner, fluctuations in the sulphur dioxide concentration of the regeneration off-gas were levelled-out and a relatively concentrated sulphur dioxide stream was supplied to the sulphur recovery process at a substantially constant rate.

Although this process supplies relatively concentrated sulphur dioxide to the sulphur recovery process at a substantially constant rate, the off-gas must be cooled and the fat liquid absorbent must be transferred to a buffer zone before the absorbed $SO_2$ can be stripped. Therefore, what is needed is a simpler process whereby these steps are eliminated and energy costs reduced.

In US-A-3832445 sulphur compounds are removed from gas streams such as Claus plant tail gases by incineration, absorption on a $SO_2$-binding material, regeneration of the loaded absorbent by contacting it with a reducing gas and optional conversion of the released $SO_2$ into elemental sulphur. Reducing gases are hydrogen or hydrocarbons such as methane.

Ammonia acid gases typically are combusted sub-stoichiometrically at about 2300°F (1260°C) at the front of the sulphur plant combustion chamber to completely destroy the ammonia. A portion of a clean acid gas (ammonia free) is also introduced along the ammonia acid gas to control the temperature. The processing of the ammonia acid gas in the combustion chamber increases the sulphur plant size due to the increase in volume of the gases that need to be processed by the sulphur plant. For example, processing of ammonia may increase the hydraulic size of the plant by 20 to 50% based on the amount of ammonia acid gas that is processed. Further, ammonia that is not destroyed in the combustion chamber will form salts. Ammonia and sulphur dioxide react to form a very dense white smog of ammonium hydrosulphide. Ammonia in significant concentration of $CO_2$ will form ammonium bicarbonates. These salts will lay down to plug sulphur seal legs, sulphur condensers, heat exchangers and reactor beds. This salt problem reduces the reliability of the sulphur plant.

According to one aspect of the invention there is provided a method of removing sulphur from an ammonia acid gas stream containing at least one sulphur compound, which at least one sulphur compound comprises hydrogen sulphide, wherein the ammonia acid gas stream is fed to an incinerator, which method comprises:

(a) combusting the ammonia acid gas stream with an oxygen containing gas in the incinerator at a temperature in the range 1500°F to 2500°F (816°C to 1371°C) to convert the ammonia to nitrogen and the or each sulphur compound to at least one sulphur oxide;

(b) withdrawing from the incinerator a gas stream containing nitrogen and the or each sulphur oxide, and directing the sulphur oxide containing gas stream to an absorber having an absorbent bed adapted to remove sulphur compounds so that the gas stream fed to the absorbent bed leaves the bed in the form of a nitrogen bearing stream;

(c) contacting the absorbent bed with a hydrogen and/or hydrocarbon containing stream to regenerate the absorbent bed by reducing the sulphur compounds absorbed in the absorbent bed to hydrogen sulphide and/or sulphur dioxide, and thereby forming an offgas stream containing hydrogen sulphide and/or sulphur dioxide; and

(d) recovering sulphur from the hydrogen sulphide and/or sulphur dioxide bearing stream.

In one construction, the absorbent bed is provided in at least two fixed-bed reactors, and sulphur oxide containing gas stream from the incinerator is fed to a first one of said reactors until the bed therein is spent absorbed sulphur compounds; thereafter said sulphur oxide containing gas stream is fed to a second one of said reactors; and said hydrogen and/or hydrocarbon bearing gas stream is fed to said first one of said reactors to form said off gas stream and thus regenerate said first one of said reactors.

Preferably said sulphur oxide containing gas stream and said hydrogen and/or hydrocarbon bearing gas stream are alternately fed to each one of said reactors, whereby each bed is first spent with said absorbed sulphur compounds, and then regenerated by said hydrogen and/or hydrocarbon bearing stream to form said off gas stream.

In another construction said absorbent bed is in a fluidized bed system comprising a reactor, a regenerator, a conduit for feeding spent absorbent from the reactor to the regenerator, and another conduit for passing regenerated absorbent from the regenerator to the reactor; and wherein said sulphur oxide containing gas stream from the incinerator is fed to the reactor to absorb said sulphur oxide on the absorbent, and said hydrogen and/or hydrocarbon bearing stream is fed to the regenerator to reduce said absorbed sulphur compounds to said off gas stream.

The absorbent bed may comprise a fixed bed solid absorbent or a granulated moving bed solid absorbent.

The absorbent is preferably a metal oxide, or a mixtures of metal oxides, impregnated with a promoter: the metal oxide is preferably alumina, while the promoter is preferably a rare earth. Most preferably the promoter is $CeO_2$ and/or Pt. The absorbent may comprise Mg/Al spinels. 11, preferably a magnesium-aluminum-containing spinel impregnated with vanadium and cerium.

The absorbent may be magnesium aluminate impregnated with an oxygen promoter.

The off gas stream is desirably directed to a Claus sulphur recovery process where the sulphur compounds are converted to elemental sulphur.

The absorbent may be reconstituted in the presence of water into a form which is active for further absorption of sulphur oxides. The absorbent may increase in weight from substantially 10 to substantially 60 wt. % due to absorbed sulphur oxides.

Preferably, greater than 70 vol. % of sulphur in the off gas stream is in the form of sulphur dioxide.

Preferably the ammonia acid gas stream is combusted in the incinerator at a temperature of from substantially 1500°F (816°C) to substantially 2500°F (1371°C): this combustion desirably takes place with fuel gas.

The ammonia acid gas stream may be stoichiometrically combusted; or it may be combusted with excess air or oxygen.

An oxygen containing gas can be added to said nitrogen and sulphur oxide containing gas stream withdrawn from the incinerator.

The nitrogen and sulphur oxide containing gas stream contacting said solid absorbent bed preferably has an oxygen content of from substantially 0.10 vol% to substantially 10 vol%, more preferably 2 vol% to 4 vol%.

The absorbent bed while absorbing the sulphur oxides thereon is preferably operated at a gas hourly space velocity (GHSV) substantially 500 to substantially 20,000, a pressure of from substantially 0.1 atm to substantially 10 atm (10 to 1000 Kpa), and a temperature of from substantially 900°F (482°C) to substantially 1400°F (760°C). More preferably the GHSV is from substantially 3,000 to substantially 5,000, the temperature is from about 1,100°F (593°C) to substantially 1,300°F (704°C), and the pressure is from substantially 1.5 to substantially 3.0 atm (150 to 300 Kpa).

The absorbent bed while being regenerated is preferably operated at a temperature of from substantially 900°F (482°C) to substantially 1,400°F (760°C), at a pressure of from substantially 0.10 to substantially 10 atm (10 to 1000 Kpa), and a gas hourly space velocity of substantially 10 to substantially 1,000. More preferably the temperature is from about 1,100°F (593°C) to about 1,300°F (704°C), the pressure is from substantially 0.5 atm to substantially 3.0 atm (50 to 300 Kpa), and the GHSV is from substantially 100 to substantially 150.

The nitrogen and sulphur oxide containing stream withdrawn from the incinerator may be passed through a heat exchanger and to a condenser for reducing the temperature of said enriched stream to from substantially 250°F (121°C) to substantially 300°F (149°C) to condense elemental sulphur out of said withdrawn stream as a liquid sulphur stream; thereafter said withdrawn stream may be looped back through said heat exchanger to be reheated to from substantially 900°F (482°C) to substantially 1,400°F (760°C) for contacting said solid absorbent bed.

The nitrogen bearing stream from said absorber is fed to an incinerator or is vented.

According to another aspect of the invention there is provided the use of apparatus for a method according to the invention comprising:

(a) an incinerator for combusting the ammonia acid gas stream with an oxygen containing gas at a temperature in the range 1500°F-2500°F (816°C to 1371°C) to convert the ammonia to nitrogen and the or each sulphur compound to at least one sulphur oxide;
(b) means for contacting a sulphur oxide and nitrogen containing gas withdrawn from the incinerator with an absorbent bed adapted to remove sulphur compounds and not to absorb the nitrogen formed in the incinerator from a sulphur oxide and nitrogen containing gas stream withdrawn from the incinerator;
(c) means for regenerating said absorbent bed by contacting it with a hydrogen and/or hydrocarbon containing stream, whereby the sulphur compounds absorbed in said absorbent bed are reduced to hydrogen sulphide and/or sulphur dioxide, thereby forming an off gas stream containing hydrogen sulphide and/or sulphur dioxide; and
(d) means to recovering sulphur from said hydrogen sulphide and/or sulphur dioxide bearing stream.

The means for recovering sulphur comprises a Claus sulphur recover apparatus. Means for supplying fuel gas to said combusting means may also be provided.

In one construction the contacting means and the regenerating means comprises at least two fixed-bed reactors, each bed being formed of said absorbent. The apparatus further comprises switching means (1) for feeding said sulphur oxide containing gas stream withdrawn from the incinerator to a first one of said reactors until the bed therein is spent with absorbed sulphur compounds, and thereafter (2) for feeding said sulphur oxide containing gas stream to a second one of said reactors while feeding said hydrogen and/or hydrocarbon bearing gas stream to said first one of said reactors to form said off gas stream and thus regenerate said first one of said reactors.

In another construction said contacting means comprises a reactor, and said absorbent bed regeneration means comprises a regenerator. The apparatus further comprises means for continuously feeding a fluidized bed of spent absorbent from the reactor to the regenerator, and for passing a fluidized bed of regenerated absorbent from the regenerator to the reactor; whereby said sulphur oxide containing gas stream from the incinerator is fed to said absorbent in the reactor for absorbing said sulphur oxide, and means for feeding said hydrogen and/or hydrocarbon bearing stream to the regenerator to reduce absorbed sulphur compounds to hydrogen sulphide and/or sulphur dioxide, and thus form said off gas stream.

Reference is now made to the accompanying drawings, in which:

Fig. 1 is a schematic flow diagram of a desulphurization process according to an embodiment of the invention, wherein a fixed-bed system for recovering sulphur from ammonia acid gas is employed;
Fig. 2 is a schematic flow diagram illustrating a modification of the embodiment shown in figure 1; and
Fig. 3 is a schematic flow diagram of a desulphurization process according to the embodiment of the invention, wherein a fluidized bed system is employed.

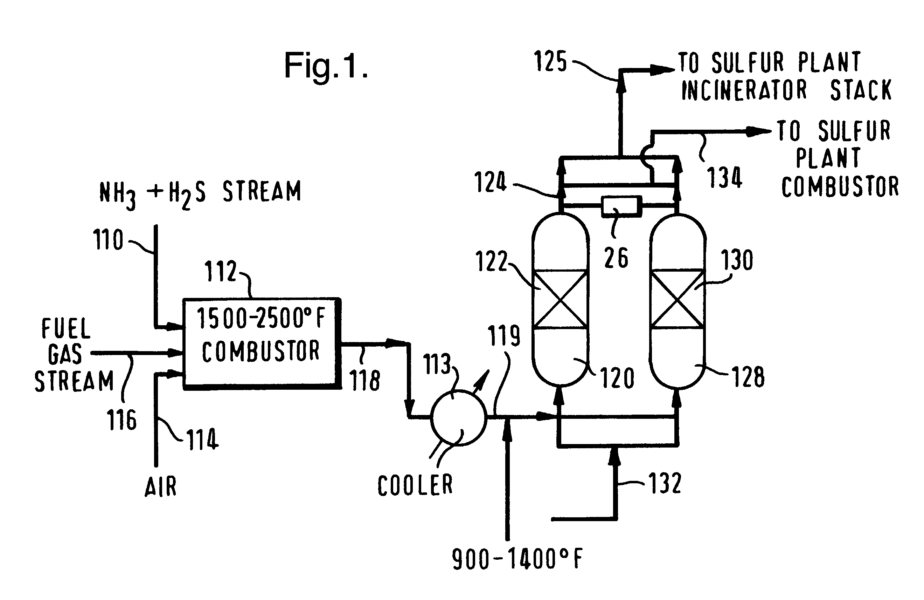

Referring to Fig. 1 an ammonia acid gas stream 110 containing hydrogen sulphide is fed to a relatively small combustion furnace 112. An air stream 114 and a fuel gas stream 116 are also fed to the combustion furnace 112 at rates sufficient to maintain the temperature in the furnace 112 within the range of 1500°F (815°C) to 2500°F (1371°C), and to maintain an atmosphere for stoichiometric combustion such that ammonia destruction is maximized and the ammonia is thus completely dissociated into $N_2$ and $H_2$. The $H_2$ will burn to produce water, while the $N_2$ remains as an inert gas. Concurrently, the hydrogen sulphide is completely converted to sulphur oxides ($SO_x$). A nitrogen and sulphur oxide enriched gas stream 118 from the furnace 112 is cooled in a heat exchanger 113 to within a range of from about 900°F (482°C) to about 1400°F (760°C), and fed by line 119 to a first fixed-bed reactor 120 containing a solid absorbent bed 122.

The solid absorbent bed 122 absorbs substantially all of the sulphur oxide from the nitrogen and sulphur oxide enriched gas stream 118, and provides a nitrogen bearing gas stream through outlet conduit 124. The nitrogen bearing stream is fed through a valve system (not shown) to a line 125 leading to an incinerator or to a stack.

While in an absorbent mode, the reactor 120 is operated at a temperature from about 900°F (482°C) to about 1,400°F (760°C). A temperature of from about 1,100°F (593°C) to about 1,300°F (704°C) is preferred. The oxygen content of the stream 119 entering the absorbent bed 122 is in an amount of from about 0.10 to about 10 vol%, 2 to about 4 vol% is preferred. Pressure within the reactor 120 should be maintained at a pressure of from about 0.1 to about 10 atmospheres (10 to 1000 Kpa), preferably from about 1.5 to about 3.0 atmospheres (150 to 300 Kpa). GHSV should be from about 500 to about 20,000, and preferably from about 3,000 to about 5,000 GHSV. An additional benefit of operating the reactor 122 during the absorbent mode within these parameters is that any carbon monoxide therein is converted into carbon dioxide which is released into the environment. Other gases released from the reactor 120 include nitrogen, oxygen, and trace amounts of sulphur dioxide along with water.

When the combustor 112 is operated stoichiometrically as it is preferred to maximize ammonia destruction, air or oxygen must be added to maintain the oxygen content of the stream 119 as discussed above. However, it is contemplated that the combustor 112 may be operated with excess oxygen supplied by the air stream 114. In this latter case, air or oxygen may not have to be added to the feed stream 119 to the reactor 120.

The absorbent can be in the form of balls, pebbles, spheres, extrudates, channelled monoliths, microspheres or pellets. This sulphur oxide-capturing absorbent provides absorbers or acceptors which absorb, and collect, or otherwise remove sulphur oxides from the influent gaseous stream. In one embodiment, the bed 122 is Mg/Al spinels.

The outlet conduit 124 is monitored by a sensor 126 until sulphur dioxide break-through occurs. A suitable sensor is a Siemens Ultramat 22P infrared analyzer. Of course, as will be understood by those skilled in the art, other comparable analyzing equipment can be used.

Sulphur dioxide break-through occurs when a substantial increase in the concentration of sulphur dioxide occurs in the conduit 124. This increase will be in the order of from about 3 ppm to about 250 ppm in less than about 2 minutes.

When sulphur dioxide break-through is detected, the nitrogen and sulphur oxide enriched gas stream 118 is directed through a suitable valve system (not shown) into a second fixed-bed reactor 128 having a solid absorbent bed 130 therein. Concurrently, the valve system directs a $H_2$ rich stream 32 to the first reactor 120 for regenerating the first absorbent bed 122. The $H_2$ rich stream 132 may contain $H_2$ and/or hydrocarbons.

During regeneration of the absorbent bed 122 the temperature is maintained between about 900°F (482°C) to about 1,400°F (760°C); and the pressure in the reactor 120 is maintained at about 0.10 to about 10 atmospheres (10 to 1000 Kpa), preferably about 0.5 to about 3 atmospheres (150 to 300 Kpa). The $H_2$ and/or hydrocarbon stream 132 is directed into the reactor 120 at a gas hourly space velocity (GHSV) of about 10 to about 1,000,preferably about 100 to about 150. Initially, a GHSV of about 300 is preferred when commencing regeneration of a fixed-bed absorbent so that a higher concentration of liberated gases can be removed from the regenerator. As regeneration proceeds, the GHSV can be reduced to about 50 as the concentration of liberated gases diminishes. Similarly, although hydrogen is the preferred reducing gas for regeneration, other hydrocarbon reducing gases can be used. These will preferably comprise $C_1$ through $C_5$ hydrocarbons. Substantially improved regeneration results are anticipated when water is co-fed into the reactor along with the hydrocarbons. The $H_2$ and/or hydrocarbon stream 132 may contain 0.0 to 50% water.

Regeneration of the bed 122 provides a hydrogen sulphide and/or sulphur dioxide bearing stream through the outlet conduit 124, the valve system (not shown), and via line 134 to the sulphur plant for recovery of sulphur. The hydrogen sulphide and/or sulphur dioxide bearing stream may also contain water and unconverted reducing gas. The nitrogen and sulphur oxide enriched stream 118 and the hydrogen and/or hydrocarbon bearing stream 132 are alternately fed to each one of the reactors 120,128, whereby each bed 122,130 is first spent by sulphur oxides extracted from the stream 118, and then regenerated by the hydrogen and/or hydrocarbon bearing stream 132.

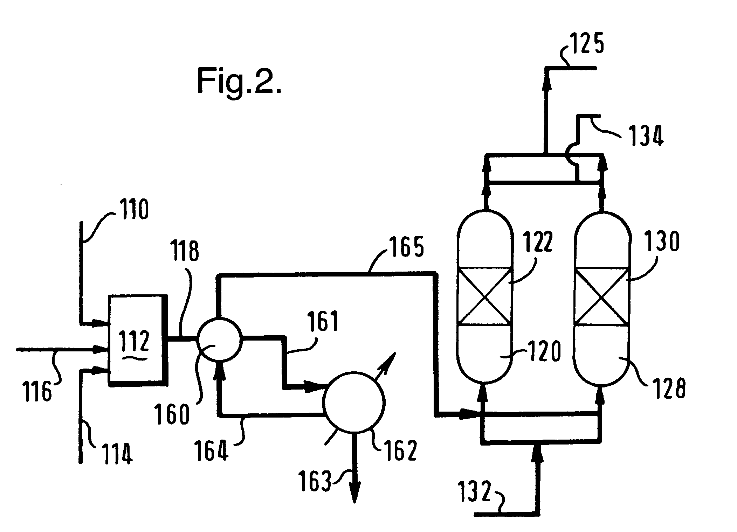

With reference to Fig. 2, there is shown a modification of the system of Fig. 1 for extracting sulphur from the nitrogen and sulphur oxide enriched stream 118 before the stream 118 is fed to one of the reactors 120,128. Specifically, the enriched stream 118 is passed through a heat exchanger 160, line 161 to a cooler/condenser 162 where the nitrogen and sulphur oxide enriched stream 118 is cooled to from about 250°F (121°C) to about 300°F (149°C) to allow elemental sulphur to condense out as a liquid sulphur stream 163. The remainder of the enriched stream is looped back through the heat exchanger 160 via line 164 to reheat the enriched stream to within the range of from about 900°F (482°C) to about 1400°F (760°C), and preferably from about 1,100°F (593°C) to about 1,300°F (704°C), for input by line 165 to one of the reactors 122,130. If there is stoichiometric combustion in the combustor 112, this cooling and reheating loop may extract from about 10% to about 60% of the sulphur content of the combustor output stream 118. The remaining elements of Fig. 2 function in the same manner as identically numbered elements of Fig. 1 described hereinabove.

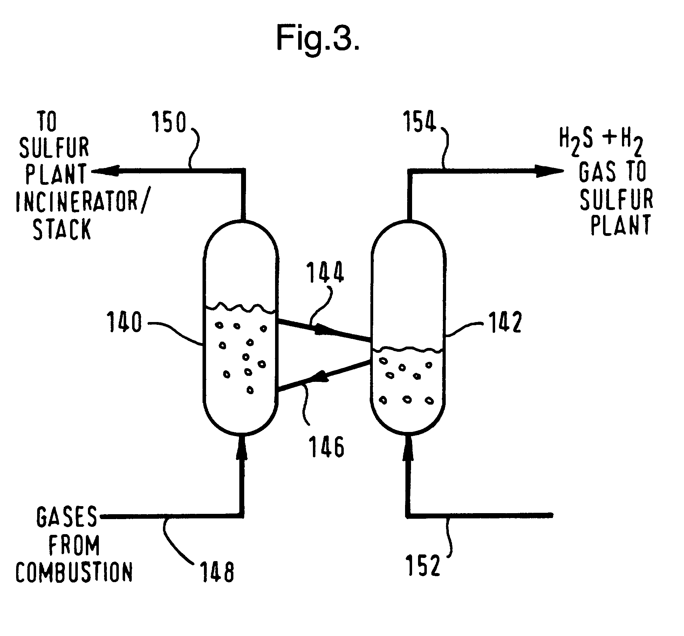

With reference to Fig. 3, there is shown a fluidized bed system comprising a reactor 140, a regenerator 142, a conduit 144 for feeding spent absorbent from the reactor to the regenerator 142, and another conduit for passing a fluidized bed of regenerated absorbent from the regenerator 142 to the reactor 140. A nitrogen and sulphur oxide enriched stream 148 from the combustor 112 (Fig. 1) is fed to the lower end of the reactor 140, over absorbent therein to strip out the sulphur oxides and provide a nitrogen enriched stream 150 for the incinerator or the stack. A hydrogen bearing stream 152 is fed to the bottom of the regenerator 142 to reduce the sulphur compounds on the spent absorbent to hydrogen sulphide and form a hydrogen sulphide and/or sulphur dioxide bearing outlet stream 150.

Operating parameters for the fluidized system are substantially the same as those described above with respect to the Figs. 1 or 2 fixed-bed embodiments. Further, the operating conditions for the combustor 112 are similar when using either the fluidized or fixed bed systems. The temperature in the fluidized bed reactor 140 is maintained at from about 900°F (482°C) to about 1,400°F (760°C), preferably between about 1,100°F 593°C) to about 1,300°F (704°C). The oxygen content of the stream 148 introduced into the reactor 140 is maintained in an amount of from about 0.1 to about 10 vol%, preferably 2 to about 4 vol%. Pressure in the reactor 140 should be maintained at about 0.1 to about 10 atmospheres (10 to 1000 Kpa), preferably about 1.5 to about 3 atmospheres (150 to 300 Kpa). The GHSV should be maintained at about 400 to about 7,000, preferably about 500 to about 2,500.

The following discussed absorbents are described in US-A-4692318. Absorbents which can be used preferably comprise substantially alumina, and most preferably alumina compounded with magnesia, for best results. $\gamma$-alumina, $\chi$-$\eta$-$\rho$-alumina, $\delta$-alumina, and $\theta$-alumina are particularly useful as adsorbents and supports because of their high surface areas.

The term "adsorbent" is used interchangeably herein with the term "absorbent." While $\alpha$-alumina and -alumina can be used as adsorbents, they are not as effective as $\gamma$-alumina, $\chi$-$\eta$-$\rho$-alumina, $\delta$-alumina, and $\theta$-alumina. One or more oxides of other metals can also be used as adsorbents, either alone or in combination with alumina or as spinels, such as bismuth, manganese, yttrium, antimony, tin, copper, Group 1a metals, Group 2a metals, rare earth metals, and combinations thereof. Magnesium aluminate spinels are particularly useful as absorbers. Lanthanum and cerium are preferred rare earth metals. Naturally occurring rare earths, such as in the form of baestenite, are also useful absorbers. Elemental copper or copper compound absorbers, such as copper oxide absorbers, can also be used. The copper oxide can be cuprous oxide and/or cupric oxide. Other copper compounds can be used, such as copper (II) sulphate, copper (II) acetate, copper (II) formate, copper (II) nitrate and/or copper (II) chloride. The absorbers can also be a blend/mixture of high density and low density materials.

The metal or metal oxide part of the absorbers can be supported, carried and held on a refractory support or carrier material which also provides part of the absorbers. The support controls the attrition and surface area characteristics of the absorbers. The support preferably has a surface area greater than about 10 $m^2/g$ and most preferably from about 50 $m^2/g$ to about 500 $m^2/g$ for best results. Suitable supporters include, but are not limited to, silica, alumina, kaolin or other clays, diatomaceous earth, boria, and/or mullite. The support can comprise the same material as the metal or metal oxide part of the absorbers.

The absorbers can be impregnated or otherwise coated with an oxidizing catalyst or promoter that promotes the removal of sulphur oxides and/or nitrogen oxides. One useful catalyst is ceria (cerium oxide). Another useful catalyst is platinum. Other catalytic metals, both free and in combined form, preferably as an oxide form, can be used, either alone or in combination with each other or in combination with ceria and/or alumina, such as rare earth metals, metals from Group 8 of the Periodic Table, chromium, vanadium, rhenium, tungsten, silver and combinations thereof. The promoter can comprise the same material as the absorber. An even distribution of the promoter is preferred for best results and to minimize adsorbent erosion.

The Group 1a metals, Group 2a metals, and Group 8 metals referred to are those listed in the Periodic Table of the Elements in the Handbook of Chemistry and Physics (54th Edition). Useful Group 1a metals include lithium, sodium, potassium, rubidium, and cesium. Useful Group 2a metals include magnesium, calcium, strontium, and barium. Useful Group 8 metals are the Group 8 noble metals (the platinum family of metals) including ruthenium, rhodium, palladium, osmium, iridium, and platinum. The rare earth metals are also useful and are referred to as the lanthanides. Suitable rare earth metals include cerium, praseodymium, neodymium, samarium, europium, gadolinium, terbium, dysprosium, holmium, erbium, thulium, ytterbium, and lutetium.

Other absorbents useful in the practice of the present invention are the metal containing spinels disclosed in US-A-4790982. One absorbent in US-A-4790982 that is particularly suitable for use in the instant invention is the magnesium, aluminum-containing spinel impregnated with 2% vanadium and 10% cerium shown in Example 10 of the patent.

The following examples are illustrative of sorbents suitable for use in the reactor beds of the above embodiment of the present invention.

EXAMPLE 1

A ceria/alumina sorbent was prepared by impregnating high pore value γ-alumina (1/8" (0.32cm) extrudate from Dycat International) with a solution of 32.7 grams $Ce(NO_3)6.6H_2O$ from Aldrich Chemical Company in 45 grams of water, using an incipient wetness technique. The material was dried for three hours at 120°C (248°F) and calcined one hour at 700°C (1,292°F), in air. The composition was approximately 11% $CeO_2$/Al2O3. This material was crushed and sieved to 14/60 mesh (API).

EXAMPLE 2

A magnesium aluminate sorbent was prepared, starting with two solutions. Solution I contained 461.5 grams magnesium nitrate, 68.6 grams of concentrated nitric acid, and 500 ml of water. Solution II contained 209.7 grams sodium aluminate, 10.7 grams sodium hydroxide, and 500 ml of water. To Solution I were added 2 litres of water, and then over a 30 minute period, Solution II. Sodium hydroxide was then added in an amount to bring the pH up to 10.7. The resulting mixture was aged for 16 hours and then filtered. The recovered solids were dried at 170°C (338°F) for 12 hours and sized to 14/60 mesh (API). This material had a composition of about $Mg_2Al2O_5$.

EXAMPLE 3

To make a sorbent with approximately 100 ppm platinum loading, 35 grams of the magnesium aluminate from Example 2 was impregnated using an incipient wetness technique with a solution of 0.013 gram of chloroplatinic acid (37% Pt. assay) in 16 ml of water. The resulting solids were calcined in air at 450°C (810°F) for three hours and sized to 14/60 mesh (API).

EXAMPLE 4

A sorbent with approximately 10% ceria loading on magnesium aluminate was prepared by adding a solution of 9.71 grams cerium nitrate in 16 ml of water to 35 grams of magnesium aluminate from Example 1, using an incipient wetness method. The material was then dried for three hours at 120°C (248°F), calcined in air one hour at 700°C (1,292°F), and sized to 14/60 mesh (API).

**Claims**

1. A method of removing sulphur from an ammonia acid gas stream containing at least one sulphur compound which at least one sulphur compound comprises hydrogen sulphide wherein the ammonia acid gas stream is fed to an incinerator, which method comprises:

(a) combusting the ammonia acid gas stream with an oxygen containing gas in the incinerator at a temperature in the range 1500°F to 2500°F (816°C to 1371°C) to convert the ammonia to nitrogen and the or each sulphur compound to at least one sulphur oxide;

(b) withdrawing from the incinerator a gas stream containing nitrogen and the or each sulphur oxide, and directing the sulphur oxide containing gas stream to an absorber having an absorbent bed adapted to remove sulphur compounds so that the gas stream fed to the absorbent bed leaves the bed in the form of a nitrogen bearing stream;

(c) contacting the absorbent bed with a hydrogen and/or hydrocarbon containing stream to regenerate the absorbent bed by reducing the sulphur compounds absorbed in the absorbent bed to hydrogen sulphide and/or sulphur dioxide, and thereby forming an off gas stream containing hydrogen sulphide and/or sulphur dioxide; and

(d) recovering sulphur from the hydrogen sulphide and/or sulphur dioxide bearing stream.

2. A method according to claim 1, wherein said absorbent bed is provided in at least two fixed-bed reactors, and sulphur oxide containing gas stream from the incinerator is fed to a first one of said reactors until the bed therein is spent with absorbed sulphur compounds; thereafter said sulphur oxide containing gas stream is fed to a second one of said reactors; and said hydrogen and/or hydrocarbon bearing gas stream is fed to said first one of said reactors for form said off gas stream and thus regenerate said first one of said reactors.

3. A method according to claim 1 or 2, wherein said sulphur oxide containing gas stream and said hydrogen and/or hydrocarbon bearing gas stream are alternately fed to each one of said reactors, whereby each bed is first spent with said absorbed sulphur compounds, and then regenerated by said hydrogen and/or hydrocarbon bearing stream to form said off gas stream.

4. A method according to any preceding claim, wherein said absorbent bed is in a fluidized bed system comprising a reactor, a regenerator, a conduit for feeding spent absorbent from the reactor to the regenerator, and another conduit for passing regenerated absorbent from the regenerator to the reactor; and wherein said sulphur oxide containing gas stream from the incinerator is fed to the reactor to absorb said sulphur oxide on the absorbent, and said hydrogen and/or hydrocarbon bearing stream is fed to the regenerator to reduce said absorbed sulphur compounds to said off gas stream.

5. A method according to any preceding claim, wherein said absorbent bed comprises a fixed bed solid absorbent.

6. A method according to any preceding claim 1 to 4, wherein said absorbent bed comprises a granulated moving bed solid absorbent.

7. A method according to any preceding claim, wherein said absorbent comprises a metal oxide, or a mixture of metal oxides, impregnated with a promoter.

8. A method according to claim 7, wherein the metal oxide comprises alumina and the promoter comprises a rare earth.

9. A method according to claim 7, wherein said promoter comprises $CeO_2$ and/or Pt.

10. A method according to any preceding claim, wherein the solid absorbent comprises a Mg/Al spinel.

11. A method according to claim 10, wherein the solid absorbent comprises a magnesium-aluminum-containing spinel impregnated with vanadium and cerium.

12. A method according to any preceding claim, wherein the solid absorbent comprises a magnesium aluminate impregnated with an oxygen promoter.

13. A method according to any preceding claim, wherein said off gas stream is directed to a Claus sulphur recovery process where the sulphur compounds are converted to elemental sulphur.

14. A method according to any preceding claim, wherein said absorber is operated at a temperature of substantially 900°F (482°C) to substantially 1,400°F (760°C).

15. A method according to any preceding claim, wherein the absorbent is reconstituted in the presence of water into a form which is active for further absorption of sulphur oxides.

16. A method according to any preceding claim, wherein said absorbent increases in weight from substantially 10 to substantially 60 wt. % due to absorbed sulphur oxides.

17. A method according to any preceding claim, wherein greater than 70 vol. % of sulphur in the off gas stream is in the form of sulphur dioxide.

18. A method according to any preceding claim, wherein the gas stream containing sulphur compounds which is fed to the incinerator contains carbon monoxide, and greater than substantially 90 vol. % of said carbon monoxide is converted to carbon dioxide.

19. A method according to any preceding claim, wherein said oxygen containing stream contains sufficient oxygen such that when it is introduced into the incinerator an oxygen content of substantially 0.10 to substantially 10 vol. % is maintained in gases issuing from the incinerator.

20. A method according to any preceding claim, wherein the pressure in said absorber is substantially 0.1 to substantially 10 atmospheres (10 to 1000kPa).

21. A method according to any preceding claim, wherein said absorber is operated at a temperature of from substantially 900°F (482°C) to substantially 1,400°F (760°C), a pressure of substantially 1 to substantially 2 atmospheres (100 to 200 kPa), and a GHSV (gas hourly space velocity) of substantially 500 to substantially 50,000.

22. A method according to claim 21, wherein the absorber is operated at a GHSV of substantially 2,000 to substantially 5,000, a pressure of substantially 1 to substantially 2 atmospheres (100 to 200 kPa), and a temperature of substantially 1,100°F (593°C) to substantially 1,350°F (732°C).

23. A method according to any preceding claim, wherein said absorber is operated at a temperature of substantially 1,100°F (593°C) to substantially 1,300°F (704°C), a GHSV of substantially 2,000 to substantially 5,000, a pressure of substantially 0.5 to substantially 3 atmospheres (50 to 300 kPa), and oxygen in an amount of about 2 to about 5 vol % in the presence of a ceria/alumina absorbent.

24. A method according to any preceding claim, wherein said ammonia acid gas stream is combusted with fuel gas.

25. A method according to any preceding claim, wherein said ammonia acid gas stream is stoichiometrically combusted.

26. A method according to any preceding claim, wherein an oxygen containing gas is added to said nitrogen and sulphur oxide containing gas stream withdrawn from the incinerator.

27. A method according to any preceding claim, wherein said ammonia acid gas stream is combusted with excess air or oxygen.

28. A method according to any preceding claim, wherein said nitrogen and sulphur oxide containing gas stream contacting said solid absorbent bed has an oxygen content of from substantially 0.10 vol% to substantially 10 vol%.

29. A method according to any preceding claim, wherein oxygen content is from substantially 2 vol% to substantially 4 vol%.

30. A method according to any preceding claim, wherein said absorbent bed while absorbing the sulphur oxides thereon is operated at a GHSV of from substantially 500 to substantially 20,000, a pressure of from substantially 0.1 atm to substantially 10 atm (10 to 1000kPa), and a temperature of from substantially 900°F (482°C) to substantially 1400°F (760°C).

31. A method according to claim 30, wherein said GHSV is from substantially 3,000 to substantially 5,000, said temperature is from about 1,100°F (593°C) to substantially 1,300°F (704°C), and said pressure is from substantially 1.5 to substantially 3.0 atm (150 to 300 kPa).

32. A method according to any preceding claim, wherein said absorbent bed while being regenerated is operated at a temperature of from substantially 900°F (482°C) to substantially 1,400°F (760°C), at a pressure of from substantially 0.10 to substantially 10 atm (10 to 1000kPa), and a GHSV of substantially 10 to substantially 1,000.

33. A method according to any preceding claim, wherein said temperature is from about 1,100°F (593°C) to about 1,300°F (704°C), said pressure is from substantially 0.5 atm to substantially 3.0 atm (50 to 300 kPa), and said GHSV is from substantially 100 to substantially 150.

34. A method according to any preceding claim, wherein said nitrogen and sulphur oxide containing stream withdrawn from the incinerator is passed through a heat exchanger and to a condenser for reducing the temperature of said enriched stream to from substantially 250°F (121°C) to substantially 300°F (149°C) to condense elemental sulphur out of said withdrawn stream as a liquid sulphur stream, thereafter said withdrawn stream being looped back through said heat exchanger to be reheated to from substantially 900°F (482°C) to substantially 1,400°F (760°C) for contacting said solid absorbent bed.

**35.** A method according to any preceding claim, wherein said ammonia acid gas stream is combusted in an oxidizing atmosphere.

**36.** A method according to any preceding claim, wherein said nitrogen bearing stream from said absorber is fed to an incinerator or is vented.

**37.** Use of apparatus for removing sulphur from an ammonia acid gas stream by a method according to any preceding claim, the apparatus comprising;

(a) an incinerator for combusting the ammonia acid gas stream with an oxygen containing gas at a temperature in the range 1500°F-2500°F (816°C to 1371°C) to convert the ammonia to nitrogen and the or each sulphur compound to at least one sulphur oxide;

(b) means for contacting a sulphur oxide and nitrogen containing gas withdrawn from the incinerator with an absorbent bed adapted to remove sulphur compounds and not to absorb the nitrogen formed in the incineration from a sulphur oxide and nitrogen containing gas stream withdrawn from the incinerator;

(c) means for regenerating said absorbent bed by contacting it with a hydrogen and/or hydrocarbon containing stream, whereby the sulphur compounds absorbed in said absorbent bed are reduced to hydrogen sulphide and/or sulphur dioxide, thereby forming an off gas stream containing hydrogen sulphide and/or sulphur dioxide; and

(d) means to recovering sulphur from said hydrogen sulphide and/or sulphur dioxide bearing stream.

**38.** Use according to claim 37, wherein said means for recovering sulphur comprises a Claus sulphur recovery apparatus.

**39.** Use according to claim 37 or 38, wherein said combusting means operates at a temperature of from substantially 1500°F (816°C) to substantially 2500°F (1371°C).

**40.** Use according to any of claims 37 to 39, further comprising means for supplying fuel gas to said combusting means.

**41.** Use according to any of claims 37 to 40, wherein the contacting means and the regenerating means comprises at least two fixed-bed reactors, each bed being formed of said absorbent; and its apparatus further comprising switching means (1) for feeding said sulphur oxide containing gas stream withdrawn from the incinerator to a first one of said reactors until the bed therein is spent with absorbed sulphur compounds, and thereafter (2) for feeding said sulphur oxide containing gas stream to a second one of said reactors while feeding said hydrogen and/or hydrocarbon bearing gas stream to said first one of said reactors to form said off gas stream and thus regenerate said first one of said reactors.

**42.** Use according to any of claims 37 to 41, wherein said contacting means comprises a reactor, and said absorbent bed regeneration means comprises a regenerator; and said apparatus further comprising means for continuously feeding a fluidized bed of spent absorbent from the reactor to the regenerator, and for passing a fluidized bed of regenerated absorbent from the regenerator to the reactor; whereby said sulphur oxide containing gas stream from the incinerator is fed to said absorbent in the reactor for absorbing said sulphur oxide, and means for feeding said hydrogen and/or hydrocarbon bearing stream to the regenerator to reduce absorbed sulphur compounds to hydrogen sulphide and/or sulphur dioxide, and thus form said off gas stream.

**Patentansprüche**

**1.** Verfahren zum Entfernen von Schwefel aus einem Ammoniaksäuregasstrom, der mindestens eine Schwefelverbindung enthält, wobei mindestens eine Schwefelverbindung Schwefelwasserstoff enthält sowie in dem Verfahren der Ammoniaksäuregasstrom in einen Veraschungsofen eingespeist wird und das Verfahren folgende Stufen umfaßt:

(a) Verbrennen des Ammoniaksäuregasstroms mit einem sauerstoffhaltigen Gas in dem Veraschungsofen bei einer Temperatur im Bereich von 1500 °F bis 2500 °F (816 °C bis 1371 °C) , um das Ammoniak in Stickstoff und die oder jede Schwefelverbindung in mindestens ein Schwefeloxid umzuwandeln,

(b) Abziehen eines Gasstroms, der Stickstoff und das oder jedes Schwefeloxid enthält, aus dem Veraschungsofen und Überführen des Schwefeloxid enthaltenden Gasstroms zu einem Absorber mit einem Absorptionsmittelbett, das für das Entfernen von Schwefelverbindungen ausgebildet ist, so daß der in das Absorptionsmittelbett eingespeiste Gasstrom dieses Bett in Form eines Stickstoff enthaltenden Stroms verläßt,

(c) Inkontaktbringen des Absorptionsmittelbetts mit einem Wasserstoff und/oder einen Kohlenwasserstoff enthaltenden Gasstrom, um das Absorptionsmittelbett zu regenerieren, und zwar durch Reduzieren der in dem Absorptionsmittelbett absorbierten Schwefelverbindungen zu Schwefelwasserstoff und/oder Schwefeldioxid, und dadurch einen Abgasstrom zu bilden, der Schwefelwasserstoff und/oder Schwefeldioxid enthält, und

(d) Gewinnen von Schwefel aus dem Strom, der Schwefelwasserstoff und/oder Schwefeldioxid enthält.

2. Verfahren nach Anspruch 1, worin das Absorptionsmittelbett in mindestens zwei Festbettreaktoren bereitgestellt wird und ein Schwefeloxid enthaltender Gasstrom aus dem Veraschungsofen zu einem ersten dieser Reaktoren geführt wird, bis das Bett darin durch absorbierte Schwefelverbindungen verbraucht ist, anschließend der Schwefeloxid enthaltende Gasstrom einem zweiten dieser Reaktoren zugeführt wird und der genannte Gasstrom, welcher Wasserstoff und/oder einen Kohlenwasserstoff enthält, in den erwähnten ersten der Reaktoren eingespeist wird, um den genannten Abgasstrom zu bilden und so den erwähnten ersten der Reaktoren zu regenerieren.

3. Verfahren nach Anspruch 1 oder 2, worin der Schwefeloxid enthaltende Gasstrom und der Gasstrom, welcher Wasserstoff und/oder einen Kohlenwasserstoff enthält, alternativ einem der erwähnten Reaktoren zugeführt werden, wodurch jedes Bett zuerst durch die absorbierten Schwefelverbindungen verbraucht und dann durch den genannten Strom, der Wasserstoff und/oder einen Kohlenwasserstoff enthält, regeneriert wird, um den erwähnten Abgasstrom zu bilden.

4. Verfahren nach einem vorstehenden Ansprüche, worin das Absorptionsmittelbett in einem Fließbettsystem vorliegt, das einen Reaktor, einen Regenerator, eine Leitung zum Einspeisen von verbrauchtem Absorptionsmittel aus dem Reaktor in den Regenerator und eine andere Leitung zum Überführen von regeneriertem Absorptionsmittel vom Regenerator zum Reaktor aufweist, und worin der Schwefeloxid enthaltende Gasstrom aus dem Veraschungsofen dem Reaktor zugeführt wird, um das Schwefeloxid an dem Absorptionsmittel zu absorbieren, sowie der Strom, welcher Wasserstoff und/oder einen Kohlenwasserstoff enthält, dem Regenerator zugeleitet wird, um die absorbierten Schwefelverbindungen zu dem erwähnten Abgasstrom zu reduzieren.

5. Verfahren nach einem der vorstehenden Ansprüche, worin das Absorptionsmittelbett ein Festbett aus festem Absorptionsmittel aufweist.

6. Verfahren nach einem der vorstehenden Ansprüche 1 bis 4, worin das Absorptionsmittelbett ein bewegtes Bett aus einem granulierten festen Absorptionsmittel aufweist.

7. Verfahren nach einem der vorstehenden Ansprüche, worin das Absorptionsmittel ein mit einem Promotor imprägniertes Metalloxid oder Gemisch aus Metalloxiden enthält.

8. Verfahren nach Anspruch 7, worin das Metalloxid Aluminiumoxid und der Promotor eine Seltene Erde enthält.

9. Verfahren nach Anspruch 7, worin der Promotor $CeO_2$ und/oder Pt enthält.

10. Verfahren nach einem der vorstehende Ansprüche, worin das feste Absorptionsmittel einen Mg-Al-Spinell enthält.

11. Verfahren nach Anspruch 10, worin das feste Absorptionsmittel einen mit Vanadium und Cer imprägnierten, Magnesium und Aluminium enthaltenden Spinell enthält.

12. Verfahren nach einem der vorstehenden Ansprüche, worin das feste Absorptionsmittel ein mit einem Sauerstoffpromotor imprägniertes Magnesiumaluminat enthält.

13. Verfahren nach einem der vorstehenden Ansprüche, worin der Abgasstrom einem Claus-Schwefelgewinnungsprozeß zugeführt wird, worin die Schwefelverbindungen in elementaren Schwefel umgewandelt werden.

14. Verfahren nach einem der vorstehenden Ansprüche, worin der Absorber bei einer Temperatur von im wesentlichen 900 °F (482 °C) bis im wesentlichen 1400 °F (760 °C) betrieben wird.

15. Verfahren nach einem der vorstehenden Ansprüche, worin das Absorptionsmittel in Gegenwart von Wasser wieder in eine Form gebracht wird, die für eine weitere Absorption von Schwefeloxiden aktiv ist.

16. Verfahren nach einem der vorstehenden Ansprüche, worin das Absorptionsmittel aufgrund von absorbierten Schwefeloxiden eine Gewichtszunahme von im wesentlichen 10 bis im wesentlichen 60 Gew% erfährt.

17. Verfahren nach einem der vorstehenden Ansprüche, worin mehr als 70 Vol% Schwefel in dem Abgasstrom in Form von Schwefeldioxid vorliegen.

**18.** Verfahren nach einem der vorstehenden Ansprüche, worin der Schwefelverbindungen enthaltende Gasstrom, welcher dem Veraschungsofen zugeführt wird, Kohlenmonoxid enthält und mehr als im wesentlichen 90 Vol% dieses Kohlenmonoxids in Kohlendioxid umgewandelt werden.

**19.** Verfahren nach einem der vorstehenden Ansprüche, worin der genannte Sauerstoff enthaltende Strom genügend Sauerstoff aufweist, daß bei seinem Einführen in den Veraschungsofen in den Gasen, die diesen verlassen, ein Sauerstoffgehalt von im wesentlichen 0,10 bis im wesentlichen 10 Vol% aufrechterhalten wird.

**20.** Verfahren nach einem der vorstehenden Ansprüche, worin der Druck in dem Absorber im wesentlichen 0,1 bis im wesentlichen 10 Atmosphären (10 bis 1000 kPa) beträgt.

**21.** Verfahren nach einem der vorstehenden Ansprüche, worin der Absorber bei einer Temperatur von im wesentlichen 900 °F (482 °C) bis im wesentlichen 1400 °F (760 °C), einem Druck von im wesentlichen 1 bis im wesentlichen 2 Atmosphären (100 bis 200 kPa) und einem GHSV-Wert (einer stündlichen Gasraumgeschwindigkeit) von im wesentlichen 500 bis im wesentlichen 50000 betrieben wird.

**22.** Verfahren nach Anspruch 21, worin der Absorber bei einem GHSV-Wert von im wesentlichen 2000 bis im wesentlichen 5000, einem Druck von im wesentlichen 1 bis im wesentlichen 2 Atmosphären (100 bis 200 kPa) und einer Temperatur von im wesentlichen 1100 °F (593 °C) bis im wesentlichen 1350 °F (732 °C) betrieben wird.

**23.** Verfahren nach einem der vorstehenden Ansprüche, worin der Absorber bei einer Temperatur von im wesentlichen 1100 °F (593 °C) bis im wesentlichen 1300 °F (704 °C), einem GHSV-Wert von im wesentlichen 2000 bis im wesentlichen 5000, einem Druck von im wesentlichen 0,5 bis im wesentlichen 3 Atmosphären (50 bis 300 kPa) und in Anwesenheit von Sauerstoff in einer Menge von etwa 2 bis etwa 5 Vol% in Gegenwart eines Ceroxid-/Aluminiumoxid-Absorptionsmittels betrieben wird.

**24.** Verfahren nach einem der vorstehenden Ansprüche, worin der Ammoniaksäuregasstrom mit Heizgas verbrannt wird.

**25.** Verfahren nach einem der vorstehenden Ansprüche, worin der Ammoniaksäuregasstrom stöchiometrisch verbrannt wird.

**26.** Verfahren nach einem der vorstehenden Ansprüche, worin ein Sauerstoff enthaltendes Gas dem Gasstrom zugefügt wird, der Stickstoff und Schwefeloxid enthält und aus dem Veraschungsofen abgezogen wird.

**27.** Verfahren nach einem der vorstehenden Ansprüche, worin der Ammoniaksäuregasstrom mit einem Überschuß an Luft oder Sauerstoff verbrannt wird.

**28.** Verfahren nach einem der vorstehenden Ansprüche, worin der Gasstrom, welcher Stickstoff und Schwefeloxid enthält und das Bett des festen Absorptionsmittels kontaktiert, einen Sauerstoffgehalt von im wesentlichen 0,10 Vol% bis im wesentlichen 10 Vol% aufweist.

**29.** Verfahren nach einem der vorstehenden Ansprüche, worin der Sauerstoffgehalt im wesentlichen 2 Vol% bis im wesentlichen 4 Vol% beträgt.

**30.** Verfahren nach einem der vorstehenden Ansprüche, worin das- Absorptionsmittelbett während des Absorbierens der Schwefeloxide daran bei einem GHSV-Wert von im wesentlichen 500 bis im wesentlichen 20000, einem Druck von im wesentlichen 0,1 atm bis im wesentlichen 10 atm (10 bis 1000 kPa), und einer Temperatur von im wesentlichen 900 °F (482 °C) bis im wesentlichen 1400 °F (760 °C) betrieben wird.

**31.** Verfahren nach Anspruch 30, worin der GHSV-Wert im wesentlichen 3000 bis im wesentlichen 5000, die Temperatur etwa 1100 °F (593 °C) bis im wesentlichen 1300 °F (704 °C) und der Druck im wesentlichen 1,5 bis im wesentlichen 3,0 atm (150 bis 300 kPa) betragen.

**32.** Verfahren nach einem der vorstehen Ansprüche, worin das Absorptionsmittelbett beim Regenerieren mit einer Temperatur von im wesentlichen 900 °F (482 °C) bis im wesentlichen 1400 °F (760 °C), einem Druck von im wesentlichen 0,10 bis im wesentlichen 10 atm (10 bis 1000 kPa) und einem GHSV-Wert von im wesentlichen 10 bis im wesentlichen 1000 betrieben wird.

**33.** Verfahren nach einem der vorstehenden Ansprüche, worin die genannte Temperatur etwa 1100 °F (593 °C) bis etwa 1300 °F (704 °C), der genannte Druck im wesentlichen 0,5 atm bis im wesentlichen 3,0 atm (50 bis 300 kPa) und der genannte GHSV-Wert im wesentlichen 100 bis im wesentlichen 150 betragen.

**34.** Verfahren nach einem der vorstehenden Ansprüche, worin der Stickstoff und Schwefeloxid enthaltende Strom, welcher aus dem Veraschungsofen abgezogen wird, durch einen Wärmeaustauscher und zu einem Kondensator zum Vermindern der Temperatur des angereicherten Stroms auf im wesentlichen 250 °F (121 °C) bis im wesentlichen 300 °F (149 °C) geleitet wird, um elementaren Schwefel als flüssigen Schwefelstrom aus dem abgezogenen Strom zu kondensieren, und anschließend der abgezogene Strom durch den genannten Wärmeaustauscher zurückgeführt wird, um ihn für einen Kontakt mit dem Bett des festen Absorptionsmittels wieder auf im wesentlichen 900 °F (482 °C) bis im wesentlichen 1400 °F (760 °C) zu erhitzen.

35. Verfahren nach einem der vorstehenden Ansprüche, worin der Ammoniaksäuregasstrom in einer oxidierenden Atmosphäre verbrannt wird.

36. Verfahren nach einem der vorstehenden Ansprüche, worin der Stickstoff enthaltende Strom aus dem Absorber in einen Veraschungsofen eingespeist oder in die Luft abgegeben wird.

37. Verwendung einer Vorrichtung zum Entfernen von Schwefel aus einem Ammoniaksäuregasstrom durch ein Verfahren gemäß einem der vorstehenden Ansprüche, wobei die Vorrichtung folgende Merkmale aufweist:

   (a) Einen Veraschungsofen zum Verbrennen des Ammoniaksäuregasstrom mit einem Sauerstoff enthaltenden Gas bei einer Temperatur im Bereich von 1500 °F bis 2500 °F (816 °C bis 1371 °C), um das Ammoniak in Stickstoff und die oder jede Schwefelverbindung in mindestens ein Schwefeloxid umzuwandeln,

   (b) Mittel zum Inkontaktbringen eines Schwefeloxid und Stickstoff enthaltenden Gases, das aus dem Veraschungsofen abgezogen worden ist, mit einem Absorptionsmittelbett, das dazu ausgebildet ist, Schwefelverbindungen aus einem Schwefeloxid und Stickstoff enthaltenden Gasstrom, der aus dem Veraschungsofen abgezogen worden ist, zu entfernen und den in dem Veraschungsofen gebildeten Stickstoff nicht zu absorbieren.

   (c) Mittel zum Regenerieren des Absorptionsmittelbetts durch Inkontaktbringen mit einem Strom, der Wasserstoff und/oder einen Kohlenwasserstoff enthält, wodurch die in dem Absorptionsmittelbett absorbierten Schwefelverbindung zu Schwefelwasserstoff und/oder Schwefeldioxid reduziert werden und dadurch ein Abgasstrom gebildet wird, der Schwefelwasserstoff und/oder Schwefeldioxid enthält, und

   (d) Mittel zum Gewinnen von Schwefel aus dem Strom, der Schwefelwasserstoff oder Schwefeldioxid enthält.

38. Verwendung nach Anspruch 37, worin die Mittel zum Gewinnen von Schwefel eine Claus-Schwefelgewinnungsvorrichtung aufweisen.

39. Verwendung nach Anspruch 37 oder 38, worin die Verbrennungsvorrichtung bei einer Temperatur von im wesentlichen 1500 °F (816 °C) bis im wesentlichen 2500 °F (1371 °C) arbeitet.

40. Verwendung nach einem der Ansprüche 37 bis 39, wobei weiterhin eine Vorrichtung zum Zuführen von Heizgas zu der Verbrennungsvorrichtung vorliegt.

41. Verwendung nach einem der Ansprüche 37 bis 40, worin die Kontaktvorrichtung und die Regeneriervorrichtung mindestens zwei Festbettreaktoren aufweisen und jedes Bett von dem genannten Absorptionsmittel gebildet wird , sowie die Vorrichtung einen Umschalter (1) zum Einspeisen eines Schwefeloxid enthaltenden Gasstroms, der aus dem Veraschungsofen abgezogen worden ist, in einen ersten der genannten Reaktoren, bis das Bett durch absorbierte Schwefelverbindungen verbraucht ist, und anschließend (2) zum Einspeisen des Schwefeloxid enthaltenden Gasstroms in einen zweiten der genannten Reaktoren, während in den ersten der Reaktoren ein Gasstrom eingespeist wird, der Wasserstoff und/oder einen Kohlenwasserstoff enthält, um den genannten Abgasstrom zu bilden und so den ersten der Reaktoren zu regenerieren.

42. Verwendung nach einem der Ansprüche 37 bis 41, worin die Kontaktvorrichtung einen Reaktor und die Vorrichtung zum Regenerieren des Absorptionsmittelbetts einen Regenerator aufweist sowie die genannte Vorrichtung weiterhin Mittel zum kontinuierlichen Einspeisen eines Fließbetts aus verbrauchtem Absorptionsmittel aus dem Reaktor in den Regenerator und zum Überführen eines Fließbetts aus regeneriertem Absorptionsmittel von dem Regenerator zu dem Reaktor aufweist, wodurch der Schwefeloxid enthaltende Gasstrom aus dem Verbrennungsofen dem Absorptionsmittel im Reaktor zum Absorbieren des genannten Schwefeloxids zugeführt wird, und die genannte Vorrichtung Mittel zum Einspeisen des erwähnten Stroms, welcher Wasserstoff und/oder einen Kohlenwasserstoff enthält, in den Regenerator, um absorbierte Schwefelverbindungen zu Schwefelwasserstoff und/oder Schwefeldioxid zu reduzieren, aufweist, um so den genannten Abgasstrom zu bilden.

## Revendications

1. Procédé d'élimination du soufre à partir d'un courant gazeux acide d'ammoniac contenant au moins un composé du soufre, lequel composé du soufre contient du sulfure d'hydrogène, dans lequel le courant gazeux acide d'ammoniac est chargé dans un incinérateur, lequel procédé comprend :

(a) la combustion du courant gazeux acide d'ammoniac avec un gaz contenant de l'oxygène dans l'incinérateur à une température comprise dans la gamme de 816°C à 1371°C (1500°F à 2500°F) pour convertir l'ammoniac en azote et le composé du soufre ou chacun des composés du soufre en au moins un oxyde de soufre ;

(b) le soutirage de l'incinérateur d'un courant gazeux contenant de l'azote et l'oxyde de soufre ou chacun des oxydes de soufre et l'envoi du courant gazeux contenant l'oxyde de soufre dans un absorbeur ayant un lit d'absorbant adapté pour éliminer les composés du soufre de telle sorte que le courant gazeux envoyé dans le lit d'absorbant quitte le lit sous la forme d'un courant transportant de l'azote ;

(c) la mise en contact du lit d'absorbant avec un courant contenant de l'hydrogène et/ou un hydrocarbure pour régénérer le lit d'absorbant par réduction des composés du soufre absorbés dans le lit d'absorbant en sulfure d'hydrogène et/ou en dioxyde de soufre et formation de la sorte d'un courant de gaz d'échappement contenant du sulfure d'hydrogène et/ou du dioxyde de soufre ; et

(d) récupération du soufre à partir du courant transportant du sulfure d'hydrogène et/ou du dioxyde de soufre.

2. Procédé suivant la revendication 1, dans lequel ledit lit d'absorbant est disposé dans au moins deux réacteurs à lit fixe et le courant gazeux contenant de l'oxyde de soufre provenant de l'incinérateur est envoyé dans un premier desdits réacteurs jusqu'à ce que le lit qui s'y trouve soit usé par les composés du soufre absorbés ; puis ensuite ledit courant gazeux contenant de l'oxyde de soufre est envoyé dans un second desdits réacteurs ; et ledit courant gazeux transportant de l'hydrogène et/ou un hydrocarbure est introduit dans ledit premier desdits réacteurs pour former ledit gaz d'échappement et ainsi régénérer ledit premier desdits réacteurs.

3. Procédé suivant la revendication 1 ou la revendication 2, dans lequel ledit courant gazeux contenant de l'oxyde de soufre et ledit courant gazeux transportant de l'hydrogène et/ou un hydrocarbure sont alternativement introduits dans chacun desdits réacteurs, de telle sorte que chaque lit est d'abord usé par lesdits composés du soufre absorbés et ensuite régénéré par ledit courant transportant de l'hydrogène et/ou un hydrocarbure pour former ledit courant de gaz d'échappement.

4. Procédé suivant l'une quelconque des revendications précédentes, dans lequel ledit lit d'absorbant est dans un système à lit fluidisé comprenant un réacteur, un régénérateur, une conduite pour envoyer l'absorbant usé depuis le réacteur dans le régénérateur, et une autre conduite pour envoyer l'absorbant régénéré depuis le régénérateur dans le réacteur; et dans lequel ledit courant gazeux contenant de l'oxyde de soufre provenant de l'incinérateur est introduit dans le réacteur pour absorber ledit oxyde de soufre sur l'absorbant, et ledit courant transportant de l'hydrogène et/ou un hydrocarbure est introduit dans le régénérateur pour réduire lesdits composés du soufre absorbés en ledit courant de gaz d'échappement.

5. Procédé suivant l'une quelconque des revendications précédentes, dans lequel ledit lit d'absorbant comprend un absorbant solide en lit fixe.

6. Procédé suivant l'une quelconque des revendications précédentes 1 à 4, dans lequel ledit lit d'absorbant comprend un absorbant solide en lit mobile granulé.

7. Procédé suivant l'une quelconque des revendications précédentes, dans lequel ledit absorbant comprend un oxyde métallique, ou un mélange d'oxydes métalliques, imprégné de promoteur.

8. Procédé suivant la revendication 7, dans lequel l'oxyde métallique comprend de l'alumine et le promoteur comprend une terre rare.

9. Procédé suivant la revendication 7, dans lequel ledit promoteur comprend du $CeO_2$ et/ou du Pt.

10. Procédé suivant l'une quelconque des revendications précédentes, dans lequel l'absorbant solide comprend un spinelle de Mg/Al.

11. Procédé suivant la revendication 10, dans lequel l'absorbant solide comprend un spinelle contenant du magnésium et de l'aluminium imprégné de vanadium et de cérium.

12. Procédé suivant l'une quelconque des revendications précédentes, dans lequel l'absorbant solide comprend un aluminate de magnésium imprégné de promoteur d'oxygène.

13. Procédé suivant l'une quelconque des revendications précédentes, dans lequel ledit courant de gaz d'échappement est dirigé vers un procédé de récupération de soufre Claus dans lequel les composés du soufre sont convertis en soufre élémentaire.

14. Procédé suivant l'une quelconque des revendications précédentes, dans lequel on fait fonctionner ledit absorbeur à une température de pratiquement 482°C (900°F) à pratiquement 760°C (1400°F).

15. Procédé suivant l'une quelconque des revendications précédentes, dans lequel l'absorbant est reconstitué en présence d'eau en une forme qui est active pour l'absorption ultérieure d'oxydes de soufre.

16. Procédé suivant l'une quelconque des revendications précédentes, dans lequel le poids dudit absorbant augmente de pratiquement 10% à pratiquement 60% en poids en raison des oxydes de soufre absorbés.

17. Procédé suivant l'une quelconque des revendications précédentes, dans lequel plus de 70% en volume du soufre présent dans le courant de gaz d'échappement est sous la forme de dioxyde de soufre.

18. Procédé suivant l'une quelconque des revendications précédentes, dans lequel le courant gazeux contenant des composés du soufre qui est introduit dans l'incinérateur contient du monoxyde de carbone et dans lequel plus de pratiquement 90% en volume dudit monoxyde de carbone sont convertis en dioxyde de carbone.

19. Procédé suivant l'une quelconque des revendications précédentes, dans lequel ledit courant contenant de l'oxygène contient suffisamment d'oxygène de telle sorte que, lorsqu'il est introduit dans l'incinérateur, il est maintenu dans les gaz quittant l'incinérateur une teneur en oxygène de pratiquement 0,10% à pratiquement 10% en volume.

20. Procédé suivant l'une quelconque des revendications précédentes, dans lequel la pression dans ledit absorbeur est de pratiquement 0,1 à pratiquement 10 atmosphères (10 à 1000 kPa).

21. Procédé suivant l'une quelconque des revendications précédentes, dans lequel on fait fonctionner ledit absorbeur à une température de pratiquement 482°C (900°F) à pratiquement 760°C (1400°F), une pression de pratiquement 1 à pratiquement 2 atmosphères (100 à 200 kPa) et une GHSV (vitesse spatiale horaire du gaz) de pratiquement 500 à pratiquement 50 000.

22. Procédé suivant la revendication 21, dans lequel on fait fonctionner l'absorbeur à une GHSV de pratiquement 2000 à pratiquement 5000, à une pression de pratiquement 1 à pratiquement 2 atmosphères (100 à 200 kPa) et à une température de pratiquement 593°C (1100°F) à pratiquement 732°C (1350°F).

23. Procédé suivant l'une quelconque des revendications précédentes, dans lequel on fait fonctionner ledit absorbeur à une température de pratiquement 593°C (1100°F) à pratiquement 704°C (1300°F), à une GHSV de pratiquement 2000 à pratiquement 5000, à une pression de pratiquement 0,5 à pratiquement 3 atmosphères (50 à 300 kPa) et avec de l'oxygène en une quantité d'environ 2 à environ 5% en volume en présence d'un absorbant à base d'alumine et d'oxyde de cérium.

24. Procédé suivant l'une quelconque des revendications précédentes, dans lequel ledit courant gazeux acide d'ammoniac est brûlé avec du gaz combustible.

25. Procédé suivant l'une quelconque des revendications précédentes, dans lequel ledit courant gazeux acide d'ammoniac est brûlé de façon stoechiométrique.

26. Procédé suivant l'une quelconque des revendications précédentes, dans lequel un gaz contenant de l'oxygène est ajouté audit courant gazeux contenant de l'azote et de l'oxyde de soufre soutiré de l'incinérateur.

27. Procédé suivant l'une quelconque des revendications précédentes, dans lequel ledit courant gazeux acide d'ammoniac est brûlé avec de l'air ou de l'oxygène en excès.

28. Procédé suivant l'une quelconque des revendications précédentes, dans lequel ledit courant gazeux contenant de l'azote et de l'oxyde de soufre en contact avec ledit lit d'absorbant solide a une teneur en oxygène de pratiquement 0,10% en volume à pratiquement 10% en volume.

29. Procédé suivant l'une quelconque des revendications précédentes, dans lequel la teneur en oxygène est de pratiquement 2% en volume à pratiquement 4% en volume.

30. Procédé suivant l'une quelconque des revendications précédentes, dans lequel on fait fonctionner ledit lit d'absorbant pendant l'absorption des oxydes de soufre sur celui-ci, à une GHSV de pratiquement 500 à pratiquement 20 000, à une pression de pratiquement 0,1 à pratiquement 10 atmosphères (10 à 1000 kPa) et à une température de pratiquement 482°C (900°F) à pratiquement 760°C (1400°F).

**31.** Procédé suivant la revendication 30, dans lequel ladite GHSV est de pratiquement 3000 à pratiquement 5000, ladite température est d'environ 593°C (1100°F) à pratiquement 704°C (1300°F) et ladite pression est de pratiquement 1,5 à pratiquement 3,0 atmosphères (150 à 300 kPa).

**32.** Procédé suivant l'une quelconque des revendications précédentes, dans lequel on fait fonctionner ledit lit d'absorbant, pendant sa régénération à une température de pratiquement 482°C (900°F) à pratiquement 760°C (1400°F), à une pression de pratiquement 0,10 à pratiquement 10 atmosphères (10 à 1000 kPa) et à une GHSV de pratiquement 10 à pratiquement 1000.

**33.** Procédé suivant l'une quelconque des revendications précédentes, dans lequel ladite température est d'environ 593°C (1100°F) à environ 704°C (1300°F), ladite pression est de pratiquement 0,5 atmosphère à pratiquement 3,0 atmosphères (50 à 300 kPa) et ladite GHSV est de pratiquement 100 à pratiquement 150.

**34.** Procédé suivant l'une quelconque des revendications précédentes, dans lequel ledit courant contenant de l'oxyde de soufre et de l'azote soutiré de l'incinérateur est envoyé à travers un échangeur de chaleur et dans un condenseur pour réduire la température dudit courant enrichi jusqu'à une température de pratiquement 121°C (250°F) à pratiquement 149°C (300°F) pour condenser le soufre élémentaire à partir dudit courant soutiré, sous la forme d'un courant de soufre liquide, puis ledit courant soutiré étant ensuite recyclé à travers ledit échangeur de chaleur pour être réchauffé à une température de pratiquement 482°C (900°F) à pratiquement 760°C (1400°F) pour la mise en contact avec ledit lit d'absorbant solide.

**35.** Procédé suivant l'une quelconque des revendications précédentes, dans lequel ledit courant gazeux acide d'ammoniac est brûlé dans une atmosphère oxydante.

**36.** Procédé suivant l'une quelconque des revendications précédentes, dans lequel ledit courant transportant de l'azote provenant dudit absorbeur est envoyé dans un incinérateur ou déchargé.

**37.** Utilisation d'un appareil d'élimination du soufre à partir d'un courant gazeux acide d'ammoniac par un procédé suivant l'une quelconque des revendications précédentes, l'appareil comprenant :

(a) un incinérateur pour la combustion du courant gazeux acide d'ammoniac avec un gaz contenant de l'oxygène à une température comprise dans la gamme de 816°C à 1371°C (1500°F à 2500°F) pour convertir l'ammoniac en azote et le composé du soufre ou chacun des composés du soufre en au moins un oxyde de soufre ;

(b) un moyen de mise en contact d'un gaz contenant de l'oxyde de soufre et de l'azote soutiré de l'incinérateur avec un lit d'absorbant adapté pour éliminer les composés du soufre et pour ne pas absorber l'azote formé dans l'incinérateur à partir d'un courant gazeux contenant de l'oxyde de soufre et de l'azote soutiré de l'incinérateur ;

(c) un moyen de régénération dudit lit d'absorbant par sa mise en contact avec un courant contenant de l'hydrogène et/ou un hydrocarbure de telle sorte que les composés du soufre absorbés dans ledit lit d'absorbant sont réduits en sulfure d'hydrogène et/ou en dioxyde de soufre de façon à former ainsi un courant de gaz d'échappement contenant du sulfure d'hydrogène et/ou du dioxyde de soufre ; et

(d) un moyen de récupération du soufre à partir dudit courant transportant du sulfure d'hydrogène et/ou du dioxyde de soufre.

**38.** Utilisation d'un appareil suivant la revendication 37, dans lequel ledit moyen de récupération du soufre comprend un appareil de récupération de soufre Claus.

**39.** Utilisation d'un appareil suivant la revendication 37 ou la revendication 38, dans lequel ledit moyen de combustion fonctionne à une température de pratiquement 816°C (1500°F) à pratiquement 1371°C (2500°F).

**40.** Utilisation d'un appareil suivant l'une quelconque des revendications 37 à 39, qui comprend de plus un moyen pour alimenter en gaz combustible ledit moyen de combustion.

**41.** Utilisation d'un appareil suivant l'une quelconque des revendications 37 à 40, dans lequel le moyen de mise en contact et le moyen de régénération comprennent au moins deux réacteurs à lit fixe, chaque lit étant formé dudit absorbant ; et ledit appareil comprend de plus un moyen de commutation pour (1) introduire ledit courant gazeux contenant de l'oxyde de soufre soutiré de l'incinérateur dans un premier desdits réacteurs jusqu'à ce que le lit qui se trouve à l'intérieur soit usé par les composés du soufre absorbés, et ensuite pour (2) introduire ledit courant gazeux contenant de l'oxyde de soufre dans un second desdits réacteurs pendant que ledit courant gazeux contenant de l'hydrogène et/ou un hydrocarbure est envoyé dans ledit premier desdits réacteurs pour former ledit courant de gaz d'échappement et régénérer ainsi ledit premier desdits réacteurs.

**42.** Utilisation d'un appareil suivant l'une quelconque des revendications 37 à 41, dans lequel ledit moyen de mise en contact comprend un réacteur et ledit moyen de régénération du lit d'absorbant comprend un régénérateur ; ledit appareil comprenant de plus un moyen pour alimenter de façon continue un lit fluidisé d'absorbant usé depuis le réacteur vers le régénérateur, et pour envoyer un lit fluidisé d'absorbant régénéré depuis le régénérateur vers le réacteur ; de telle sorte que ledit courant gazeux contenant de l'oxyde de soufre provenant de l'incinérateur est envoyé dans ledit absorbant dans le réacteur pour absorber ledit oxyde de soufre, et un moyen pour envoyer ledit courant gazeux transportant de l'hydrogène et/ou un hydrocarbure dans le régénérateur pour réduire les composés du soufre absorbés en sulfure d'hydrogène et/ou en dioxyde de soufre et former ainsi ledit gaz d'échappement.

Fig.1.

NH₃ + H₂S STREAM

TO SULFUR PLANT
INCINERATOR STACK

TO SULFUR
PLANT
COMBUSTOR

Fig.2.

EP 0 636 107 B1

# Fig.3.

TO
SULFUR
PLANT
INCINERATOR/
STACK

150

154

H₂S + H₂
GAS TO
SULFUR
PLANT

144

140

142

146

GASES
FROM
COMBUSTION

148

152